# EUROPEAN PATENT APPLICATION

(11) **EP 2 372 866 A2**
(43) Date of publication of application: **05.10.2011**
(21) Application number: 11150114.4
(22) Date of filing: 04.01.2011
(51) Int. Cl.: H02J 7/00

(54) **Balancing system for a battery pack**

(30) Priority: 31.03.2010 US 319396 P; 19.10.2010 US 907718
(71) Applicant: O2 Micro, Inc., Santa Clara, CA 95054 (US)
(72) Inventor: Li, Guoxing, Sunnyvale, Ca., CA 94089 (US)
(74) Representative: Lippert, Stachow & Partner

(57) **Abstract**

A balancing system for a battery pack includes a first balancing stage and a second balancing stage. The battery pack includes multiple modules and each of the modules in the battery pack includes a subset of the cells. The first balancing stage can balance an unbalanced module. The second balancing stage coupled to the first balancing stage can balance an unbalanced cell in a module.

## Description

### RELATED APPLICATION

This application claims priority to U.S. Provisional Application No. 61/319,396, filed on March 31, 2010, which is hereby incorporated by reference in its entirety.

### BACKGROUND

Currently, Li-ion batteries have been used in "green" vehicles, such as electric vehicles (EVs) and hybrid electric vehicles (HEVs). The voltage of a single cell in a Li-ion battery is approximately 3-4 volts, but EVs and HEVs usually require higher voltages up to more than 100 volts. Usually, a battery pack including multiple cells coupled in series is used to drive EVs and HEVs.

To facilitate battery management, the cells in the battery pack are arranged as multiple modules, each of which includes a specific number of cells. However, this kind of battery pack is susceptible to an unbalanced condition, which will affect the battery pack's capacity.

### SUMMARY

In one embodiment, a circuit for controlling balance of a battery pack comprising cells, comprises a first transformer having a first primary winding and a first plurality of secondary windings; and a first switch operable for coupling a plurality of said cells to said first primary winding in series, wherein in response to detecting a first unbalanced cell in said battery pack, said first unbalanced cell is coupled to said first plurality of secondary windings and said first switch is alternately turned on and off to transfer energy from said plurality of said cells to said first unbalanced cell. In a further embodiment, a method for controlling balance of a battery pack, comprises: determining if a module in said battery pack has a cell that is unbalanced, wherein said battery pack comprises a plurality of cells and wherein said module comprises a subset of said cells; if there is an unbalanced cell, then balancing said unbalanced cell; determining if said battery pack has a module that is unbalanced; and if there is an unbalanced module, then balancing said unbalanced module. In a further embodiment, a balancing system for a battery pack includes a first balancing stage and a second balancing stage. The battery pack includes multiple modules and each of the modules in the battery pack includes a subset of the cells. The first balancing stage can balance an unbalanced module. The second balancing stage coupled to the first balancing stage can balance an unbalanced cell in a module.

### BRIEF DESCRIPTION OF THE DRAWINGS

Features and advantages of embodiments of the subject matter will become apparent as the following detailed description proceeds, and upon reference to the drawings, wherein like numerals depict like parts, and in which:

FIG. 1 is a block diagram showing a balancing circuit for a module in a battery pack according to one embodiment of the present invention.

FIG. 2 is a block diagram showing a balancing circuit for a sub-module in a battery pack according to another embodiment of the present invention.

FIG. 3 is a block diagram showing a balancing circuit for a sub-module in a battery pack according to another embodiment of the present invention.

FIG. 4 is a block diagram showing a balancing circuit for a sub-module in a battery pack according to another embodiment of the present invention.

FIG. 5 is a block diagram showing a balancing circuit for a sub-module in a battery pack according to another embodiment of the present invention.

FIG. 6 is a block diagram showing a balancing system for a battery pack according to one embodiment of the present invention.

FIG. 7 is a flowchart of a method for controlling balance of a battery pack according to one embodiment of the present invention.

### DETAILED DESCRIPTION

Reference will now be made in detail to the embodiments of the present invention. While the invention will be described in conjunction with these embodiments, it will be understood that they are not intended to limit the invention to these embodiments. On the contrary, the invention is intended to cover alternatives, modifications and equivalents, which may be included within the spirit and scope of the invention as defined by the appended claims.

It should be borne in mind, however, that all of these and similar terms are to be associated with the appropriate physical quantities and are merely convenient labels applied to these quantities. Unless specifically stated otherwise as apparent from the following discussions, it is appreciated that throughout the present application, discussions utilizing the terms such as "determining," "balancing," "counting," "comparing," "coupling," "connecting," "transferring" or the like, refer to the actions and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

Furthermore, in the following detailed description of the present invention, numerous specific details are set forth in order to provide a thorough understanding of the present invention. However, it will be recognized by one of ordinary skill in the art that the present invention may be practiced without these specific details. In other instances, well known methods, procedures, components, and circuits have not been described in detail as not to unnecessarily obscure aspects of the present invention.

Embodiments in accordance with the present invention include a battery pack which has a multi-stage balancing system. Advantageously, multiple transformers are employed in the multi-stage balancing system, in one embodiment. As a result, an unbalanced condition in the battery pack can be detected and adjusted.

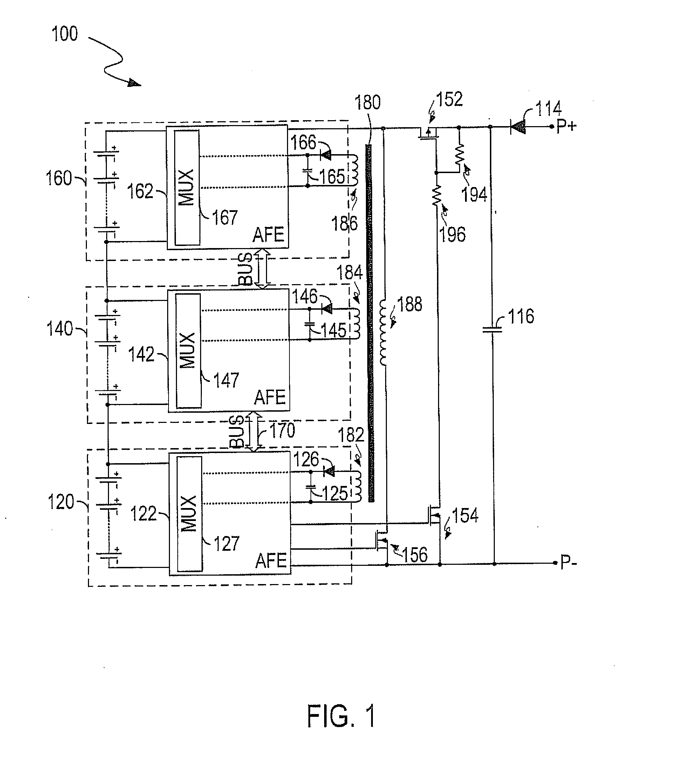

FIG. 1 shows a balancing circuit for a module 100 in a battery pack with multiple modules according to one embodiment of the present invention. In the example of FIG. 1, a number of cells in the module 100 are arranged as multiple sub-modules. The module 100 includes sub-modules 120,140, and 160, a regulator formed by a secondary side of a flyback transformer, and a switch 156. Each sub-module includes a plurality of cells and an analog front end (AFE) device such as the AFE devices 122, 142, and 162. In one embodiment, the flyback transformer includes a primary winding 188, a core 180, and secondary windings 182, 184, and 186. The secondary winding 182 is coupled to the AFE device 122 through a diode 126. In one embodiment, a capacitor 125 is coupled in parallel with the AFE device 122. In a similar manner, the secondary winding 184 is coupled to the AFE device 142 through a diode 146. A capacitor 145 is coupled in parallel with the AFE device 142. The secondary winding 186 is coupled to the AFE device 162 through a diode 166. A capacitor 165 is coupled in parallel with the AFE device 162. As such, the regulator including the secondary windings 182, 184, and 186 is formed. The regulator is coupled to the sub-modules 120, 140, and 160 through the AFE devices 122, 142, and 162, respectively. Although three sub-modules are shown in FIG. 1, the present invention is not so limited.

Each of the AFE devices 122, 142, and 162 includes a switch array, e.g., the multiplexer (MUX) 127, 147 or 167, in one embodiment. Each AFE device also has a vertical communication bus 170 which transfers information up and down from one sub-module to another sub-module that is at a different potential level. With the vertical communication buses, communication between multiple sub-modules and communication between multiple modules can be realized. In operation, each AFE device is operable for detecting an unbalanced status of the corresponding sub-module.

In one embodiment, the AFE device 122 sends control signals to control the multiplexers 127, 147, and 167 and the switch 156. The multiplexers 127, 147, and 167 and the switch 156 are controlled to do an active balance if the unbalanced status exists. For example, if the AFE device 142 detects an unbalanced cell in the sub-module 140, an alert signal indicating the unbalanced status of the sub-module 140 is sent to the bottom AFE device 122 via the vertical communication bus 170. The bottom AFE device 122 can send a control signal to the AFE device 142. In response, the multiplexer 147 in the AFE device 142 can select the unbalanced cell and couple the unbalanced cell to the secondary winding 184. If none of the cells in the sub-modules 120 and 160 is unbalanced, the multiplexers 127 and 167 do not select a cell, and the sub-modules 120 and 160 are coupled to the secondary windings 182 and 186, respectively, via the AFE devices 122 and 162. In one embodiment, the bottom AFE device 122 can further include a pulse width modulation (PWM) driver. In response to the alert signal, the PWM driver outputs a pulse signal, e.g., a PWM signal, to turn the switch 156 on and off alternately until the active balance is completed/terminated.

The active balance includes many cycles and each cycle includes an on and off period of the switch 156, in one embodiment. The switch 156 includes an N type MOSFET (metal-oxide semiconductor field-effect transistor), in one embodiment. When the switch 156 is turned on, the current flowing through the primary winding 188 ramps up and the primary winding 188 stores energy delivered from the local module 100, and no current flows through the secondary windings 182, 184, and 186 due to the reverse biased diodes 126, 146, and 166. When the switch 156 is turned off, the current flowing through the primary winding 188 ramps down and thus all the secondary windings 182, 184, and 186 get positive voltages to forward bias the diode 126, 146, and 166, respectively. As such, currents flowing through the secondary windings 182, 184, and 186 are produced and the energy stored in the primary winding 188 is transferred to the secondary windings 182, 184, and 186. As described above, the unbalanced cell in the sub-module 140 is coupled to the secondary winding 184. Thus, the energy gained by the secondary winding 184 is further delivered to the unbalanced cell. The sub-modules 120 and 160 are coupled to the secondary windings 182 and 186, respectively. Thus, the energy gained by the secondary windings 182 and 186 are further delivered to the sub-modules 120 and 160, respectively.

In other words, in a cycle of the active balance, the primary winding 188 of the flyback transformer receives energy from the local module 100 during the on period of the switch 156, and transfers energy from the local module 100 to the unbalanced cell in the sub-module 140 and to the sub-modules 120 and 160 during the off period of the switch 156. The cycle of the active balance goes on until the unbalanced cell in the sub-module 140 is balanced. When the unbalanced cell is balanced, the AFE device 142 informs the balanced status of the sub-module 140 to the AFE device 122 through the vertical communication bus 170. In response, the AFE device 122 can send control signals to disable the multiplexers 127, 147, and 167 in the module 100 and the switch 156. Thus, the active balance is terminated.

Advantageously, as the energy from the whole module 100 is used to balance an individual unbalanced cell, the balancing process can be completed at a relatively faster speed. Furthermore, if more than one sub-module includes unbalanced cells, the active balance of these unbalanced cells can be conducted concurrently. If a sub-module includes more than one unbalanced cell, multiple balancing processes are used to balance the unbalanced cells one by one. More specifically, the multiplexer in the sub-module selects a first unbalanced cell to do the active balance in a first balancing process and selects a second unbalanced cell to do the active balance in a second balancing process.

In one embodiment, another switch array (not shown) can be coupled in parallel with the switch array in each AFE device in FIG. 1. As such, a larger current can be produced to flow through the secondary windings during the balancing process and thus the balancing process can be completed at an even faster speed.

In one embodiment, the AFE device 122 monitors the current flowing through the cells and determines if an over-current situation exists. If the monitored current is higher than a specified/threshold current, the AFE device 122 determines that the over-current situation is present. In this instance, the AFE device 122 can decrease the duty cycle of the PWM signal sent to the switch 156. Thus, the current flowing through the cells decreases accordingly.

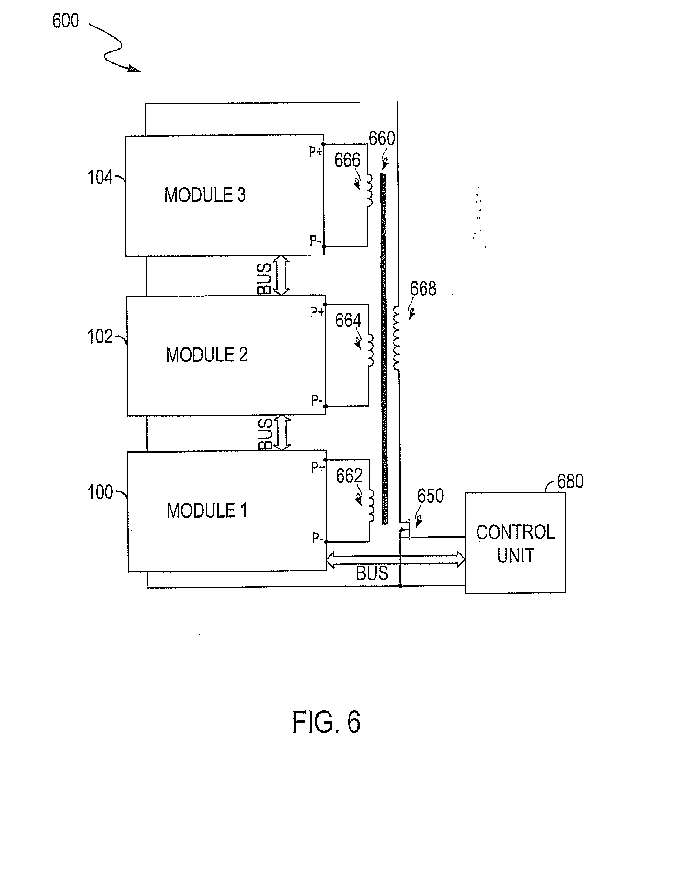

The module 100 further includes switches 152 and 154, resistors 194 and 196, a diode 114, a capacitor 116, and terminals P+ and P-, the operation of which will be described in combination with FIG. 6. FIG. 6 illustrates a block diagram of a balancing system for a battery pack according to one embodiment of the present invention. In the example of FIG. 6, a number of cells in a battery pack 600 are arranged as multiple modules. The battery pack 600 includes modules 100, 102, and 104, a regulator formed by a secondary side of a flyback transformer, a switch 650, and a control unit 680. The modules 102 and 104 are essentially the same as the module 100. Although three modules are used as shown in FIG. 6, the present invention is not so limited. In one embodiment, the flyback transformer includes a primary winding 668, a core 660, and secondary windings 662, 664, and 666. The secondary windings 662, 664, and 666 are coupled to the modules 100, 102, and 104, respectively. In one embodiment, the control unit 680 is a CECU (central electronic control unit).

In one embodiment, the modules 100, 102, and 104 have the same configuration. Each secondary winding in FIG. 6 is coupled to the corresponding module through the diode 114 and the switch 152. As such, the regulator including the secondary windings 662, 664, and 666 is formed.

As described above, communication between the modules 100, 102, and 104 can be realized by vertical communication buses. The control unit 680 is coupled to the module 100. Thus, the control unit 680 can detect an unbalanced status of the modules 100, 102, and 104; that is, whether the voltage difference between any two of the modules is below a threshold value. Furthermore, the control unit 680 can detect an unbalanced status of each cell in the battery pack 600.

In one embodiment, the control unit 680 sends control signals to control the switch 154 and the switch 650. The switch 154 and the switch 650 are controlled to balance an unbalanced module in the battery pack 600. For example, if the control unit 680 detects the module 100 is unbalanced, the control unit 680 sends a control signal to the module 100 and sends a pulse signal, e.g., a PWM signal, to the switch 650. In response, referring back to FIG. 1, the switch 154 in the module 100 can be turned on by the control signal sent from the control unit 680. Accordingly, the voltage drop across the resistor 194, which is equal to the gate-source voltage of the switch 152, is generated. Thus, the switch 152 is turned on and the module 100 is coupled to corresponding secondary winding 662 shown in FIG. 6 via the terminals P+ and P-.

The switch 650 is turned on and off alternately by the PWM signal until the active balance is completed/terminated. The active balance includes multiple cycles and each cycle includes an on and off period of the switch 650, in one embodiment. The switch 650 includes an N type MOSFET, in one embodiment. When the switch 650 is turned on, the current flowing through the primary winding 668 ramps up, the primary winding 668 stores energy delivered from the battery pack 600, and no current flows through the secondary winding 662 due to the reverse biased diode 114 in FIG. 1. When the switch 650 is turned off, the current flowing through the primary winding 668 ramps down and thus the secondary winding 662 gets a positive voltage to forward bias the diode 114. As the switch 152 is turned on in the unbalanced module 100, a current flowing through the secondary winding 662 is produced and the energy stored in the primary winding 668 is transferred to the secondary winding 662 and then to the unbalanced module 100.

The cycle of the active balance goes on until the unbalanced module 100 in the battery pack 600 is balanced. When the control unit 680 detects that the unbalanced module is balanced, the control unit 680 can send control signals to disable the switch such as the switch 154 of FIG. 1 in each module and the switch 650. Thus, the active balance is terminated.

Advantageously, if the battery pack 600 includes more than one unbalanced module, the active balance of these unbalanced modules can be conducted concurrently. Thus, a quick balance can be achieved.

The balancing circuit as described in relation to FIG. 1 and FIG. 6 can be called a multiple stage or multi-stage balancing circuit. More specifically, the balancing circuit shown in FIG. 1 performs a second stage balancing within a module, and the balancing system shown in FIG. 6 performs a first stage balancing between modules. In other words, the balancing system 600 can include a first balancing stage including the transformer and the switch 650 shown in FIG. 6. The first balancing stage can balance an unbalanced module in the battery pack. The balancing system 600 can further include a second balancing stage including the transformer and the switch 156 shown in FIG. 1. The second balancing stage can balance an unbalanced cell within the unbalanced module.

Furthermore, the control unit 680 is coupled to the module 100 and can communicate with any module in the balancing system 600 by the vertical communication buses. For example, a control signal sent from the control unit 680 can be transferred to the module 100, which in turn transfers the control signal to the module 102, which in turn transfers the control signal to the module 104 by the vertical communication buses between those modules.

Advantageously, in FIG. 6, the modules 100, 102, and 104 are cascaded and the unbalanced module/modules can be balanced by the transformer and the switch 650, which is relatively reliable. In another embodiment, the transformer in FIG. 6 is not present and each module includes a transformer that forms the aforementioned first balancing stage. In this instance, a primary winding of the transformer in each module is coupled to the battery pack and a secondary winding of the transformer is coupled to the cells in the module; however, this requires more electrical connections, and thus the embodiment shown in FIG. 6 has greater reliability.

In one embodiment, the control unit 680 firstly determines if any module in the battery pack 600 has an unbalanced cell. If a module has an unbalanced cell, the unbalanced cell can be balanced by the aforementioned second balancing stage. If the number of unbalanced cells in a module exceeds a threshold value, the control unit 680 determines that the module is unbalanced. If the control unit 680 concludes the module is unbalanced, the module can be balanced by the aforementioned first balancing stage.

In one embodiment, instead of being coupled to the battery pack 600, the primary winding 668 is coupled to a low voltage battery system (not shown in FIG. 6), such as a 12V or 42V battery pack. As such, the breakdown voltage for the switch 650 is relatively lower and it's easier to control the switch 650.

Referring back to FIG. 1, the switches 152 and 154 and the resistors 194 and 196 function together to couple the module 100 to the corresponding secondary winding in FIG. 6. Alternatively, only one switch may be employed to couple the module 100 to the corresponding secondary winding in FIG. 6. In this instance, the switch can be coupled between the sub-module 120 and the terminal P- in FIG. 1.

In one embodiment, the switch 152 is not present and the cathode of the diode 114 is directly coupled to the common node of the primary winding 188 and the resistor 194. In this instance, if the module 100 is unbalanced and its voltage level is higher than other modules in the battery pack 600 in FIG. 6, the switch 154 is turned on as described above, and the electric energy of the module 100 can be consumed by a passive bleeding path formed by the resistors 194 and 196. As a result, the voltage level of the module 100 can drop to a balanced voltage level.

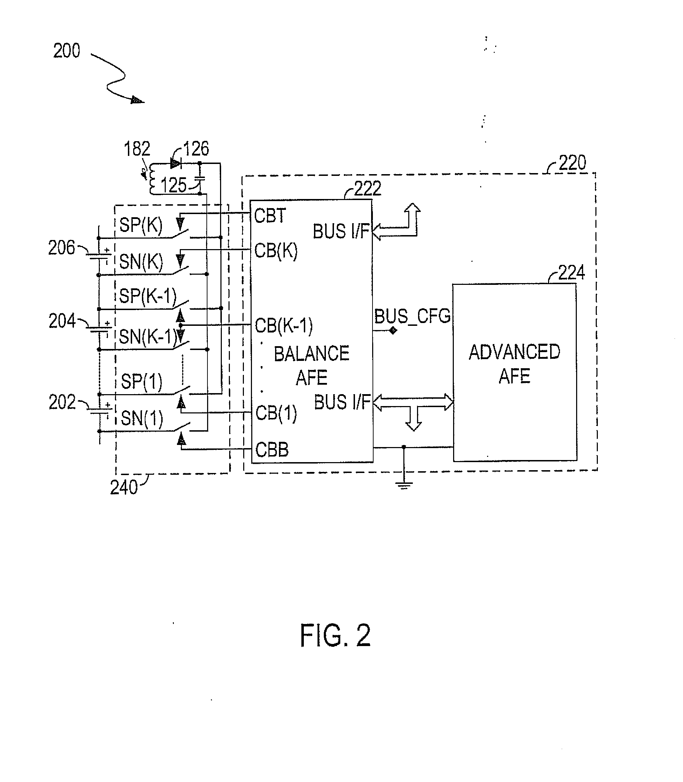

FIG. 2 shows a balancing circuit for a sub-module 200 in a battery pack according to another embodiment of the present invention. Elements labeled the same as in FIG. 1 have similar functions. FIG. 2 is described in combination with FIG. 1. In the example of FIG. 2, the sub-module 200 is coupled to the secondary winding 182, and includes multiple cells, an AFE device 220, a switch array such as a multiplexer 240, the diode 126, and the capacitor 125. Sub-modules similar to the sub-module 200 can be similarly coupled to the secondary windings 184 and 186 of FIG. 1, respectively.

In the example of FIG. 2, the switch array (e.g., multiplexer 240) is located outside the AFE device 220. The multiplexer 240 is similar to the multiplexer in each sub-module in FIG. 1, in one embodiment. Advantageously, the maximum current for the balancing process can be changed by using different rating switches in the multiplexer 240. Also, the time needed to complete a balancing process can be adjusted. For example, if the balancing process is to be completed relatively quickly, then the switch with high current rating can be used.

In the example of FIG. 2, the AFE device 220 includes a balancing AFE part 222 and an advanced AFE part 224. The balancing AFE part 222 can control the multiplexer 240 in the balancing process, in one embodiment. The advanced AFE part 224 can include an ADC (analog-to-digital converter) for converting the status of a respective cell from analog signals into digital signals which can be provided to a processor (not shown in FIG. 2). The processor can process the digital signals for various signal processing purposes.

A first set of the switches in the multiplexer 240 couples positive terminals of the multiple cells, one at a time, to one side of the secondary winding 182, in one embodiment. A second set of the switches in the multiplexer 240 couples negative terminals of the multiple cells, one at a time, to the other side of the secondary winding 182, in one embodiment. Thus, the multiplexer 240 can select each cell to do the active balance.

The AFE device 220 can be formed as an IC chip, in one embodiment. In this instance, signals from multiple pins of the AFE device 220 can control the switches in the multiplexer 240 to couple cells to the secondary winding 182. In the example of Figure 2, the cell 206 has the highest voltage level relative to ground among all the cells in the sub-module 200, the cell 202 has the lowest voltage level relative to ground among all the cells in the sub-module 200, and the cell 204 has a voltage level that is between the cell 206's voltage level and the cell 202's voltage level. The switches SP(K) and SN(K) couple the cell 206 to the winding 182, and can be controlled by signals from pins CBT and CB(K) of the balancing AFE part 222, respectively. The switches SP(1) and SN(1) couple the cell 202 to the winding 182, and can be controlled by signals from pins CB(1) and CBB of the balancing AFE part 222, respectively. The switches SP(K-1) and SN(K-1) couple the cell 204 to the winding 182, and can be controlled by signals from a pin CB(K-1) of the balancing AFE part 222. In this instance, the switches SP(K-1) and SN(K-1) can be turned on or turned off in unison.

Therefore, the signals from the balancing AFE part 222 can turn on/off the switches in the multiplexer 240 during the balancing process, in one embodiment. If the sub-module 200 has an unbalanced cell, signals from corresponding pins turn on the switches that are coupled to the positive and negative terminals of the unbalanced cell in the balancing process. Thus, the unbalanced cell can be selected to do the active balance by coupling it to the secondary winding 182. Otherwise, if the sub-module 200 does not have the unbalanced cell, signals from the pins CBT and CBB turns on the switches SP(K) and SN(1) to couple the sub-module 200 to the secondary winding 182 in the balancing process.

A pin BUS I/F of the balancing AFE part 222 is an I/O (input/output) interface, in one embodiment. A signal at the pin BUS I/F can be transmitted in either direction. For example, it can be transmitted to the advanced AFE part 224 or to the AFE devices in other sub-modules through the aforementioned vertical communication buses. The signal at a pin BUS_CFG can be used to indicate the direction for transmitting the signal at the pin BUS I/F.

In one embodiment, another switch array (not shown) can be coupled in parallel with the switch array 240 outside the AFE device 220. As such, a larger current can be produced to flow through the secondary winding 182 during the balancing process and thus the balancing process can be completed at an even faster speed.

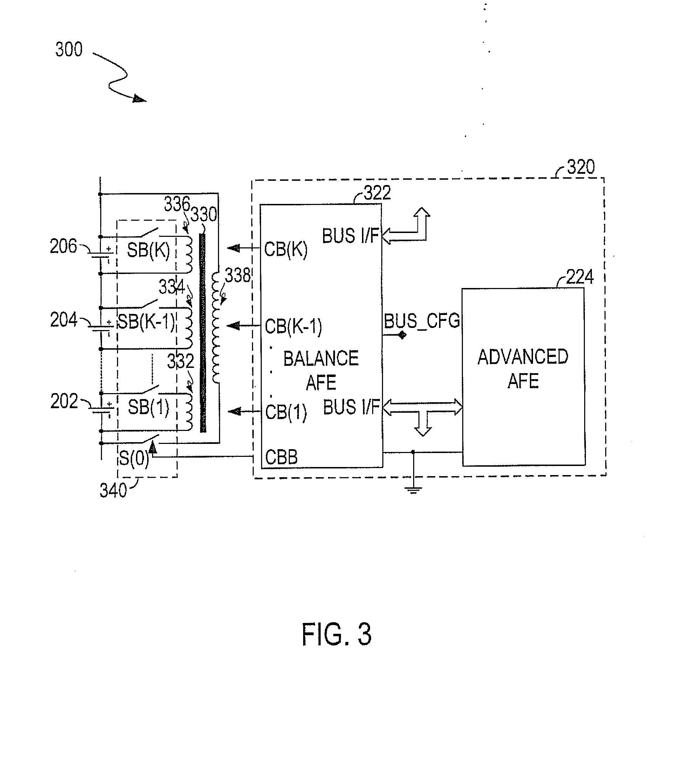

FIG. 3 shows a balancing circuit for a sub-module 300 in a battery pack with multiple modules according to another embodiment of the present invention. Elements labeled the same as in FIG. 2 have similar functions. In the example of FIG. 3, the sub-module 300 includes multiple cells, an AFE device 320, a switch array such as a multiplexer 340, and a transformer. The AFE device 320 can include a balancing AFE part 322 and an advanced AFE part 224. The transformer includes a primary winding 338, multiple secondary windings, such as windings 332, 334, and 336, and a core 330. The balancing circuit supports a local active balance of the sub-module 300.

Each cell in the sub-module 300 is coupled to each secondary winding of the transformer by the multiplexer 340, in one embodiment. Advantageously, if more than one cell in the sub-module 300 is unbalanced, the active balance of these unbalanced cells can be conducted concurrently. Furthermore, compared to the switches in the multiplexer 240 of FIG. 2, fewer switches are used in the embodiment of FIG. 3.

A switch SB(1) in the multiplexer 340 couples the cell 202 to the secondary winding 332. Similarly, a switch SB(K-1) couples the cell 204 to the secondary winding 334, and a switch SB(K) couples the cell 206 to the secondary winding 336. The switches SB(1)...SB(K-1), and SB(K) can be controlled by signals from pins CB(1)... CB(K-1), and CB(K) of the AFE device 320, respectively, in one embodiment. Switch S(0) couples the sub-module 300 to the primary winding 338 of the transformer, and can be controlled by signals from a pin CBB.

The switches in the multiplexer 340 can be controlled by pulse signals during a balancing process. For example, if the cell 202 is unbalanced, the switch S(0) can be controlled by a pulse signal from the pin CBB and the switch SB(1) can be controlled by a pulse signal from the pin CB(1) during the balancing process. During the balancing process, the switches S(0) and SB (1) are turned on alternately; that is, when switch S(0) is turned on, the switch SB(1) is off and when switch S(0) is turned on, the switch SB (1) is off.

Advantageously, the energy flow can be bi-directional in the embodiment of FIG. 3. More specifically, if the cell 202 is unbalanced and its voltage level is lower than other cells in the module, the electric energy of the sub-module 100 can be used to do the active balance. In other words, the energy from the primary winding 338 is delivered to the secondary winding 332 coupled to the cell 202 during the balancing process. If the cell 202 is unbalanced and its voltage level is higher than other cells in the module, the energy from the secondary winding 332 is delivered to the primary winding 338 during the balancing process.

If the cells 202 and 204 are unbalanced, the switch S(0) can be controlled by a pulse signal from the pin CBB and the switches SB(1) and SB(K-1) can be controlled by pulse signals from the pins CB(1) and CB(K-1) in the balancing process. In other words, if the sub-module 300 has more than one unbalanced cell, the active balance of these unbalanced cells can be conducted concurrently. Thus, a quick balance can be achieved.

In the example of FIG. 3, the primary winding 338 can be coupled to all the cells in the sub-module 300. Thus, energy from the local sub-module 300 is used to balance the unbalanced cells in the sub-module 300. Alternatively, the primary winding 338 can be coupled to more than one sub-module, e.g., the module including the sub-module 300. In this instance, the primary winding 338 and the switch S(0) function as the primary winding 188 and the switch 156 of FIG. 1, respectively. Thus, energy from the module is used to balance the unbalanced cells.

The sub-module 300 can be incorporated into the module 100 of FIG. 1 in the following manner. Referring back to FIG. 1, each of the sub-modules 120, 140, and 160 can be replaced by a sub-module 300 shown in FIG. 3, and the transformer in FIG. 1 and the switch 156 can be removed, in one embodiment. In this instance, if more than one cell in a sub-module of FIG. 1 is unbalanced, the active balance of these unbalanced cells can be conducted concurrently as described above. Furthermore, if more than one sub-module of FIG. 1 has the unbalanced cells, the active balance of these unbalanced cells can be conducted concurrently.

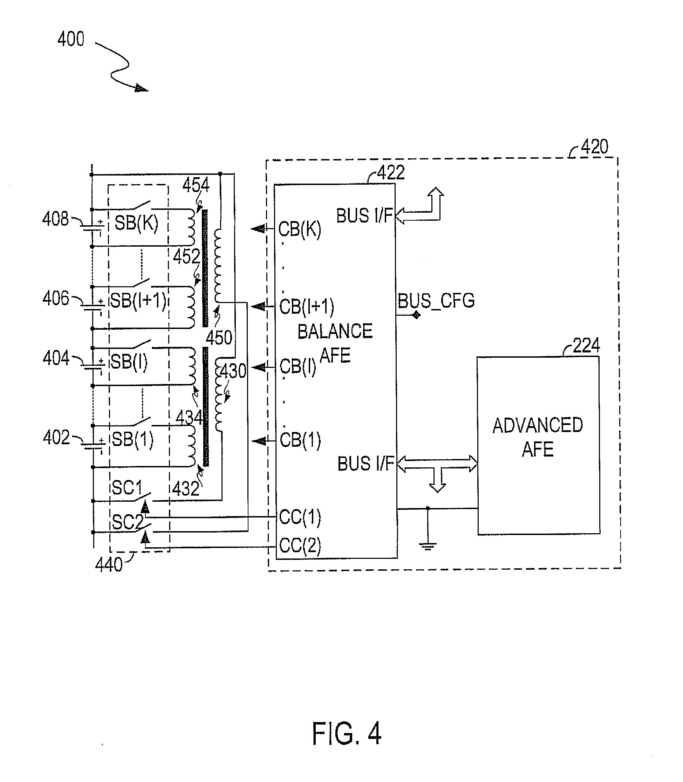

FIG. 4 shows a balancing circuit for a sub-module 400 in a battery pack according to another embodiment of the present invention. In the example of FIG. 4, the sub-module 400 includes multiple cells, an AFE device 420, a switch array such as a multiplexer 440, and two transformers. The AFE device 420 can include a balancing AFE part 422 and an advanced AFE part 224.

In the example of FIG. 4, the multiple cells are arranged as two groups, and each group is coupled to the secondary windings of a transformer. By using more than one transformer, each secondary winding can be placed as near as possible to the core center of the corresponding transformer. As such, the electromagnetic coupling of the secondary windings is relatively good. In the example of FIG. 4, the cells 408 and 402, which are positioned at the border of the sub-module 400, are coupled to the secondary windings 454 and 432 through the switches SB(K) and SB(1), respectively. The secondary windings 454 and 432 can have an electromagnetic coupling better than that of the secondary windings positioned at the border of sub-module 300 in FIG. 3. As such, if the cell 408 or the cell 402 is unbalanced, the balancing process for the cell 408 or the cell 402 performs better.

A first set of switches in the multiplexer 440 couples the cells in the first group to the secondary windings of the first transformer. For example, a switch SB(1) couples the cell 402 to a secondary winding 432, a switch SB(I) couples a cell 404 to a secondary winding 434. Similarly, a second set of switches in the multiplexer 440 couples the cells in the second group to the secondary windings of the second transformer. For example, a switch SB(I+1) couples a cell 406 to a secondary winding 452, a switch SB(K) couples the cell 408 to a secondary winding 454. In on embodiment, a switch SC(1) couples a primary winding 430 of the first transformer to all the cells in the sub-module 400, and a switch SC(2) couples a primary winding 450 of the second transformer to all the cells in the sub-module 400.

Although the cells in the sub-module 400 are arranged as two groups and accordingly two transformers are used as shown in FIG. 4, the present invention is not so limited. The cells in the sub-module 400 can be arranged as more than two groups and accordingly more than two transformers are used, in one embodiment.

Similarly, the sub-modules in the module 100 shown in FIG. 1 can be arranged as two or more groups and accordingly two or more transformers are used. Thus, the balancing process for the unbalanced cell in the sub-module 120 or the sub-module 140 can perform better.

Referring back to FIG. 4, in one embodiment, if the first group has the unbalanced cells, the switches SC1, SB(1)...SB(I) can be controlled by signals from pins CC(1), CB(1)... CB(I) of the AFE device 420 for balancing the unbalanced cells. Similarly, if the second group has the unbalanced cells, the switches SC2, SB(I+1)...SB(K) can be controlled by signals from pins CC(2), CB(I+1)... CB(K) of the AFE device 420 for balancing the unbalanced cells. Advantageously, energy flow can be bi-directional.

In the example of FIG. 4, the primary windings 430 and 450 are coupled to all the cells in the sub-module 400. Alternatively, the primary windings 430 and 450 can be coupled to more than one sub-module, e.g., the module including the sub-module 400.

The sub-module 400 can be incorporated into the module 100 of FIG. 1 in the following manner. Referring back to FIG. 1, each of the sub-modules 120, 140, and 160 can be replaced by a sub-module 400 shown in FIG. 4, and the transformer in FIG. 1 and the switch 156 can be removed, in one embodiment. In this instance, if more than one cell in a sub-module of FIG. 1 is unbalanced, the active balance of these unbalanced cells can be conducted concurrently as described above. Furthermore, if more than one sub-module of FIG. 1 has the unbalanced cells, the active balance of these unbalanced cells can be conducted concurrently.

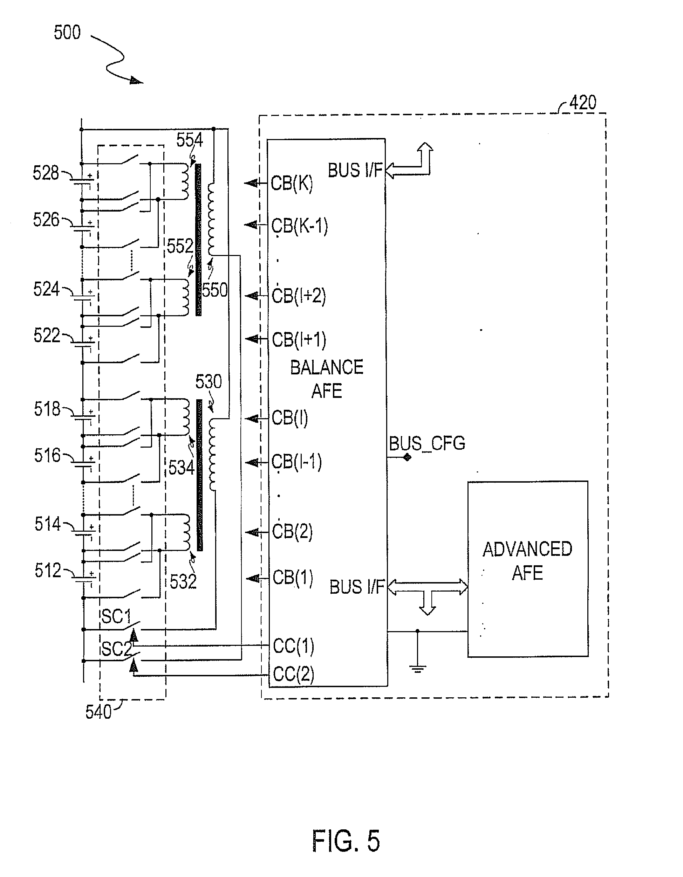

FIG. 5 shows a balancing circuit for a sub-module 500 in a battery pack according to another embodiment of the present invention. Elements labeled the same as in FIG. 4 have similar functions. In the example of FIG. 5, the sub-module 500 includes multiple cells, the AFE device 420, a switch array such as a multiplexer 540, and two transformers. The multiple cells are coupled to the two transformers by switches in the multiplexer 540.

In one embodiment, the sub-module 500 is similar to the sub-module 400 shown in FIG. 4. The multiple cells are arranged as two groups, where a first group of cells are coupled to secondary windings of a first transformer by the multiplexer 540, and a second group of cells are coupled to secondary windings of a second transformer by the multiplexer 540.

Every two cells in each group are coupled to a secondary winding of the corresponding transformer. More specifically, for example, cells 512 and 514 are coupled to a secondary winding 532 of the first transformer, and cells 516 and 518 are coupled to a secondary winding 534 of the first transformer. Similarly, cells 522 and 524 are coupled to a secondary winding 552 of the second transformer, and cells 526 and 528 are coupled to a secondary winding 554 of the second transformer. Therefore, compared to the sub-module 400 in FIG. 4, the sub-module 500 employs a reduced number of secondary windings.

The two switches for coupling a cell to a secondary winding can be controlled by signals from a pin of the AFE device 420. For example, the two switches for coupling the cell 528 to the secondary winding 554 can be controlled by signals from a pin CB(K), and the two switches for coupling the cell 526 to the secondary winding 554 can be controlled by signals from a pin CB(K-1). Advantageously, energy flow can be bi-directional.

In the example of FIG. 5, the primary windings 530 and 550 are coupled to all the cells in the sub-module 500. Alternatively, the primary windings 530 and 550 can be coupled to more than one sub-module, e.g., the module including the sub-module 500.

Although the cells in the sub-module 500 are arranged as two groups and are coupled to two transformers in the example of FIG. 5, the present invention is not so limited. Furthermore, although every two cells are coupled to each secondary winding of the transformers in the example of FIG. 5, the present invention is not so limited. More than two cells can be coupled to each secondary winding of the transformers.

The sub-module 500 can be incorporated into the module 100 of FIG. 1 in the following manner. Referring back to FIG. 1, each of the sub-modules 120, 140, and 160 can be replaced by a sub-module 500 shown in FIG. 5, and the transformer in FIG. 1 and the switch 156 can be removed, in one embodiment. In this instance, if more than one cell in a sub-module of FIG. 1 is unbalanced, the active balance of these unbalanced cells can be conducted concurrently as described above. Furthermore, if more than one sub-module of FIG. 1 has the unbalanced cells, the active balance of these unbalanced cells can be conducted concurrently.

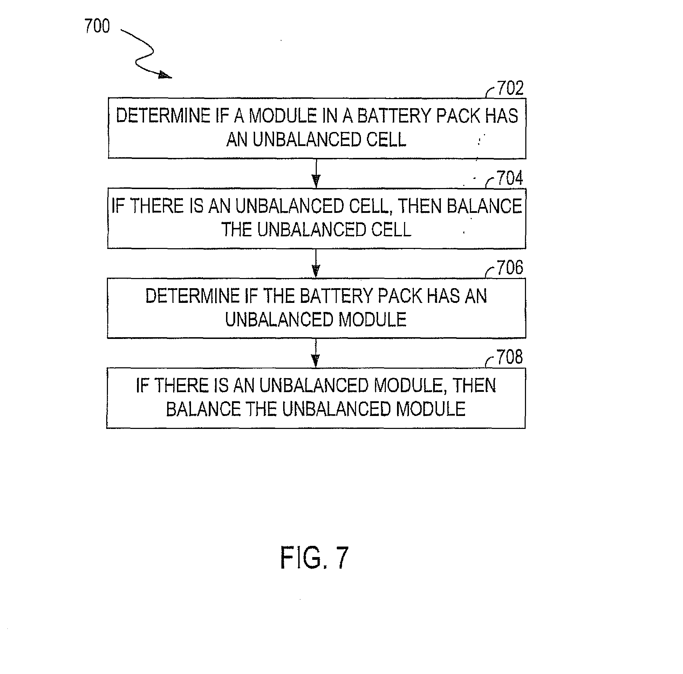

FIG. 7 shows a flowchart 700 of a method for controlling balance of a battery pack according to one embodiment of the present invention. FIG. 7 is described in combination with FIG. 1 and FIG. 6.

In block 702, the control unit 680 can determine if a module in the battery pack 600 has an unbalanced cell. The control unit 680 can communicate with the AFE device in the module 100 and can communicate with the AFE devices in the modules 102 and 104 via the vertical communication buses. Thus, the control unit 680 can access the status of each cell, e.g., the voltage level of each cell, and can detect the unbalanced cell.

In block 704, the unbalanced cell/cells can be balanced by a second balancing stage. An example of the second balancing stage is shown in FIG. 1. If the module 100 has the unbalanced cell/cells, the unbalanced cell/cells can be balanced by the transformer in FIG. 1 as described above, in one embodiment.

In block 706, the control unit 680 can determine if the battery pack 600 has an unbalanced module. In one embodiment, the control unit 680 can access the status of each module, e.g., the voltage level of each module, and can detect the unbalanced module. In another embodiment, the control unit 680 firstly determines if any module has an unbalanced cell and if the number of the unbalanced cells in a module exceeds a threshold value, the control unit 680 further determines that the module is unbalanced.

In block 708, the unbalanced module/modules can be balanced by a first balancing stage. An example of the first balancing stage is shown in FIG. 6. In one embodiment, the unbalanced module/modules can be balanced by the transformer in FIG. 6 as described above.

While the foregoing description and drawings represent embodiments of the present invention, it will be understood that various additions, modifications and substitutions may be made therein without departing from the spirit and scope of the principles of the present invention as defined in the accompanying claims. One skilled in the art will appreciate that the invention may be used with many modifications of form, structure, arrangement, proportions, materials, elements, and components and otherwise, used in the practice of the invention, which are particularly adapted to specific environments and operative requirements without departing from the principles of the present invention. The presently disclosed embodiments are therefore to be considered in all respects as illustrative and not restrictive, the scope of the invention being indicated by the appended claims and their legal equivalents, and not limited to the foregoing description.

## Claims

1. A circuit for controlling balance of a battery pack comprising cells, comprising:
a first transformer having a first primary winding and a first plurality of secondary windings; and
a first switch operable for coupling a plurality of said cells to said first primary winding in series,
wherein in response to detecting a first unbalanced cell in said battery pack, said first unbalanced cell is coupled to said first plurality of secondary windings and said first switch is alternately turned on and off to transfer energy from said plurality of said cells to said first unbalanced cell.

2. The circuit of claim 1, wherein in response to detecting a second unbalanced cell in said battery pack, said second unbalanced cell is coupled to said first plurality of secondary windings and said first switch is alternately turned on and off to transfer energy from said plurality of said cells to said first unbalanced cell and said second unbalanced cell.

3. The circuit of claim 2, wherein said battery pack comprises a plurality of modules and each of said modules comprises a subset of said cells, and wherein said first unbalanced cell and said second unbalanced cell are in a same module.

4. The circuit of claim 2, wherein said battery pack comprises a plurality of modules and each of said modules comprises a subset of said cells, wherein each of said modules comprises a plurality of sub-modules and each of said sub-modules comprises a subset of said subset of cells, and wherein said first unbalanced cell and said second unbalanced cell are in a same sub-module.

5. The circuit of claim 2, wherein said battery pack comprises a plurality of modules and each of said modules comprises a subset of said cells, wherein each of said modules comprises a plurality of sub-modules and each of said sub-modules comprises a subset of said subset of cells, and wherein said first unbalanced cell and said second unbalanced cell are in different sub-modules of a module.

6. The circuit of claim 1, further comprising:
a second transformer having a second primary winding and a second plurality of secondary windings; and
a second switch operable for coupling said plurality of said cells to said second primary winding in series,
wherein in response to detecting a second unbalanced cell in said battery pack, said unbalanced cell is coupled to said second plurality of secondary windings and said second switch is alternately turned on and off to transfer energy from said plurality of said cells to said second unbalanced cell.

7. The circuit of claim 6, wherein said battery pack comprises a plurality of modules and each of said modules comprises a subset of said cells, wherein each of said modules comprises a plurality of sub-modules and each of said sub-modules comprises a subset of said subset of cells, and wherein said first unbalanced cell and said second unbalanced cell are in different sub-modules of a module.

8. The circuit of claim 6, wherein said battery pack comprises a plurality of modules and each of said modules comprises a subset of said cells, wherein each of said modules comprises a plurality of sub-modules and each of said sub-modules comprises a subset of said subset of cells, and wherein said first unbalanced cell and said second unbalanced cell are in a same sub-module.

9. The circuit of claim 1, further comprising:
a second transformer having a second primary winding and a second plurality of secondary windings; and
a second switch operable for coupling said battery pack to said second primary winding in series,
wherein said battery pack comprises a plurality of modules and wherein each of said modules comprises a subset of said cells, and wherein in response to detecting a first unbalanced module in said battery pack, said first unbalanced module is coupled to said second plurality of secondary windings and said second switch is turned alternately on and off to transfer energy from said battery pack to said first unbalanced module.

10. The circuit of claim 9, wherein in response to detecting a second unbalanced module in said battery pack, said second unbalanced module is coupled to said second plurality of secondary windings and said second switch is alternately turned on and off to transfer energy from said battery pack to said first unbalanced module and said second unbalanced module.

11. A method for controlling balance of a battery pack, comprising:
determining if a module in said battery pack has a cell that is unbalanced,
wherein said battery pack comprises a plurality of cells and wherein said module comprises a subset of said cells;
if there is an unbalanced cell, then balancing said unbalanced cell;
determining if said battery pack has a module that is unbalanced; and
if there is an unbalanced module, then balancing said unbalanced module.

12. The method of claim 11, further comprising:
counting the number of unbalanced cells in said module; and
comparing said number to a threshold value to determine if said module is unbalanced.

13. The method of claim 11, wherein said balancing said unbalanced cell comprises:
coupling said unbalanced cell to a secondary winding of a transformer;
alternately connecting said module that includes said unbalanced cell to, and disconnecting said module that includes said unbalanced cell from, a primary winding of said transformer; and
transferring energy from said module that includes said unbalanced cell to said unbalanced cell.

14. The method of claim 11, wherein said balancing said unbalanced cell comprises:
coupling said unbalanced cell to a secondary winding of a transformer;
alternately connecting said module that includes said unbalanced cell to, and disconnecting said module that includes said unbalanced cell from, a primary winding of said transformer; and
transferring energy from said unbalanced cell to said module that includes said unbalanced cell.

15. The method of claim 11, wherein said balancing said unbalanced module comprises:
coupling said unbalanced module to a secondary winding of a transformer;
alternately connecting said battery pack to and disconnecting said battery pack from a primary winding of said transformer; and
transferring energy from said battery pack to said unbalanced module.

16. The method of claim 11, wherein said balancing said unbalanced module comprises:
coupling said unbalanced module to a secondary winding of a transformer;
alternately connecting said battery pack to and disconnecting said battery pack from a primary winding of said transformer; and
transferring energy from said unbalanced module to said battery pack.

17. A balancing system for a battery pack, comprising:
a first balancing stage operable for balancing a first unbalanced module of a plurality of modules in said battery pack, wherein said battery pack comprises a plurality of cells and wherein each of said modules comprises a subset of said cells; and
a second balancing stage coupled to said first balancing stage and operable for balancing a first unbalanced cell in a first module of said modules.

18. The balancing system of claim 17, wherein said first balancing stage is further operable for balancing said first unbalanced module and a second unbalanced module of said modules concurrently.

19. The balancing system of claim 17, wherein said second balancing stage is further operable for balancing said first unbalanced cell and a second unbalanced cell in a second module of said modules concurrently.

20. The balancing system of claim 17, wherein each of said modules comprises a plurality of sub-modules and each of said sub-modules comprises a subset of said subset of cells, wherein said second balancing stage is further operable for balancing said first unbalanced cell and a second unbalanced cell in said first module concurrently and wherein said first unbalanced cell and said second unbalanced cell are in a same sub-module of said first module.

21. The balancing system of claim 17, wherein each of said modules comprises a plurality of sub-modules and each of said sub-modules comprises a subset of said subset of cells, wherein said second balancing stage is further operable for balancing said first unbalanced cell and a second unbalanced cell in said first module concurrently and wherein said first unbalanced cell and said second unbalanced cell are in different sub-modules of said first module.

22. The balancing system of claim 17, wherein the voltage of said battery pack is used to balance said first unbalanced module via a transformer.

23. The balancing system of claim 17, wherein the voltage of said first module is used to balance said first unbalanced cell via a transformer.
